# FASCICULE DE BREVET EUROPEEN

(11) **EP 3 983 864 B1**
(45) Date de publication et mention de la délivrance du brevet: **31.07.2024**
(21) Numéro de dépôt: 20742334.4
(22) Date de dépôt: 12.06.2020
(51) Int. Cl.: G05D 16/18, B64D 13/00, F02C 6/08

(54) **RÉGULATEUR À MEMBRANE VENTILÉE**
BELÜFTETER MEMBRANREGLER
VENTED DIAPHRAGM REGULATOR

(30) Priorité: 14.06.2019 FR 1906415
(43) Date de publication de la demande: 20.04.2022
(73) Titulaire: Liebherr-Aerospace Toulouse SAS, 31200 Toulouse (FR)
(72) Inventeur: MANCHO, Jean-Luc, 31016 TOULOUSE Cedex 2 (FR); LOSSOUARN, David, 31016 TOULOUSE Cedex 2 (FR); PEYRE, Antoine, 31016 TOULOUSE Cedex 2 (FR)
(74) Mandataire: Bringer IP
(86) Numéro de dépôt international: PCT/FR2020/051015
(87) Numéro de publication internationale: WO 2020/249916

(56) Documents cités:
- DE-B3- 102013 001 278
- DE-C- 891 777
- US-A1- 2017 107 907

## Description

### Domaine technique de l'invention

L'invention concerne un régulateur. En particulier, l'invention concerne un régulateur permettant le traitement d'un air chaud porteur d'une puissance pneumatique, par exemple pour permettre le déclenchement d'un actionneur pneumatique. Un tel régulateur peut être utilisé dans un aéronef, notamment pour réguler l'air fourni à l'actionneur pneumatique d'une vanne de l'aéronef, notamment une vanne du système de conditionnement d'air.

### Arrière-plan technologique

Le régulateur permet le traitement d'un air chaud porteur de puissance pneumatique par différents éléments de traitement. Un te1 régulateur peut être aussi connu sous le terme « servocommande ».

Lorsque le régulateur est utilisé dans un environnement thermique sévère tel qu'un aéronef, il est soumis à des contraintes thermiques fortes qui nécessitent un traitement particulier. En particulier, les régulateurs comprennent des éléments particulièrement sensibles à la température, tels que des solénoïdes permettant la gestion du flux d'air de sortie du régulateur, des membranes de régulation de pression, etc. On entend plus généralement par éléments sensibles à la température, des éléments pouvant notamment être détériorés en présence d'une température élevée, ou ayant des performances réduites en présence d'une température élevée.

Les solutions actuelles pour protéger ces éléments sensibles sont par exemple :
- Déport des éléments sensibles dans un zone protégée : cette solution nécessite néanmoins l'ajout de canaux sensibles de transport de flux d'air chaud ou d'information, ce qui a un impact fort sur le coût, la masse, la fiabilité, et complexifie l'installation ;
- Ajout d'une ventilation de la zone, soit globale sur toute la zone, soit dirigée vers les éléments sensibles : cette solution a une efficacité limitée sur les éléments sensibles car elle n'est pas suffisamment spécifique à ces éléments. De plus, cette solution à un impact fort sur la consommation spécifique de carburant.

Les inventeurs ont cherché une solution pour éviter de déporter les éléments sensibles et améliorer la ventilation des éléments sensibles du régulateur.

Le document DE 10 2013 001278 décrit une vanne de régulation de pression avec un dispositif de réglage thermique. Le document US 2017/107907 décrit un système de conditionnement d'air dans une turbomachine.

### Objectifs de l'invention

L'invention vise ainsi à fournir un régulateur bénéficiant d'un refroidissement amélioré.

L'invention vise en particulier à fournir un régulateur permettant la régulation d'une vanne, permettant ainsi de former une vanne compacte en étant placé à proximité de la vanne et des autres éléments avec lesquels il interagit, sans nécessiter de déporter des éléments sensibles à la température dans des zones protégées.

L'invention vise également à fournir un régulateur particulièrement adapté pour être utilisé dans un aéronef.

### Exposé de l'invention

Pour ce faire, l'invention concerne un régulateur, selon les caractéristiques de la revendication 1, configuré pour recevoir un flux d'air chaud porteur de puissance pneumatique via une entrée d'air, pour traiter cet air chaud et pour transmettre l'air chaud traité vers une sortie d'air configurée pour alimenter un actionneur pneumatique, comprenant une source de pression de référence et un dispositif de détente de l'air comprenant une membrane, ladite membrane étant configurée pour contrôler le débit du flux d'air chaud par comparaison de la pression dudit flux d'air chaud avec la pression de référence de la source de pression de référence, le régulateur étant caractérisé en ce qu'il comprend une arrivée d'air configuré pour recevoir une source froide, et un conduit permettant de conduire la source froide à ladite membrane, de sorte que la source froide forme la source de pression de référence et une source de refroidissement de ladite membrane.

Un régulateur selon l'invention permet ainsi de refroidir la membrane du dispositif de détente de l'air via une source froide extérieure servant aussi de source de pression de référence.

Dans les systèmes de l'art antérieur, la source de pression de référence est la pression atmosphérique, obtenue grâce à l'air ambiant entourant le régulateur.

La source froide utilisée dans l'invention est de préférence à une pression proche de la pression ambiante, ce qui permet d'utiliser l'invention avec des éléments existants sans nécessiter de modification de conception. Toutefois, par rapport à l'air ambiant, la source froide a une température bien plus faible et est en mouvement (donc avec une part non négligeable de pression dynamique), ce qui permet une ventilation améliorant le refroidissement de la membrane par rapport à un air ambiant statique qui ne permet pas une bonne ventilation de la membrane.

Le refroidissement de la membrane permet de disposer le régulateur dans un environnement thermique sévère, sans besoin de déporter le régulateur. On peut ainsi mettre en place un système dit « compact » où tous les éléments du régulateur sont au plus proche à la fois du flux d'air chaud porteur de puissance pneumatique et de l'actionneur pneumatique à alimenter en air chaud traité.

En outre, l'invention permet un refroidissement plus efficace qu'une simple ventilation dirigée vers le régulateur, car la source froide formant la source de pression de référence est dirigée directement sur la membrane à l'intérieur du régulateur. L'impact sur la consommation spécifique de carburant est amoindri et le besoin en air froid est beaucoup plus faible (environ divisé par trois).

Avantageusement et selon l'invention, le régulateur comprend au moins un élément mécanique et/ou électronique sensible à la température agencé en amont ou en aval de la membrane et des conduits permettant de conduire la source froide vers ledit au moins un élément mécanique et/ou électronique sensible à la température, la source froide permettant le refroidissement dudit au moins un élément mécanique et/ou électronique sensible à la température en amont ou en aval du refroidissement de la membrane.

Selon cette variante de l'invention, la source froide peut aussi être utilisée pour refroidir un ou plusieurs autres éléments sensibles à la température. Le refroidissement du ou des éléments peut être fait en amont ou en aval du refroidissement de la membrane, selon les besoins en refroidissement de chaque élément (la source froide étant réchauffée à chaque échange thermique avec un des éléments ou la membrane).

Avantageusement et selon l'invention, chaque élément mécanique et/ou électronique sensible à la température est choisi parmi un des éléments de la liste suivante :
- un solénoïde,
- élément mécanique et/ou électronique d'un moteur-couple,
- élément mécanique et/ou électronique d'une servo-vanne.

Le solénoïde permet notamment de la gestion du flux d'air en sortie du régulateur, par l'ouverture ou la fermeture d'un clapet permettant la sortie de la quantité d'air nécessaire à l'activation de l'actionneur pneumatique au moment souhaité.

Avantageusement et selon l'invention, la source froide est prélevée dans une turbomachine.

Avantageusement et selon l'invention, la source froide est un air d'écoulement prélevé dans la turbomachine.

Selon cet aspect de l'invention, l'air d'écoulement de la turbomachine (aussi appelé *fan air* en anglais) forme une source froide particulièrement avantageuse dans un aéronef car c'est la source d'air parmi les plus froide, ayant une pression proche de la pression ambiante de l'aéronef, ce qui permet de ne pas engendrer de modifications profondes du régulateur. En particulier, le dispositif de détente fonctionne de la même façon sans nécessité de redimensionnement des pièces. Seuls les canaux permettant de mener l'air d'écoulement vers le régulateur sont nécessaires.

L'air d'écoulement est un air mis en mouvement par la turbomachine. Lorsque la turbomachine est un turboréacteur, l'air d'écoulement utilisé et l'air d'écoulement formant le flux secondaire mis en mouvement par la soufflante du turboréacteur.

L'air d'écoulement est en outre dynamique en sortie de turbomachine ce qui permet la ventilation de la membrane sans nécessiter de dispositif particulier pour mettre l'air d'écoulement en mouvement.

Avantageusement et selon une autre variante de l'invention, la source froide est un air primaire moteur prélevé dans la turbomachine.

L'air primaire moteur est l'air traversant 1a turbomachine et est avantageusement prélevé avant sa combustion dans la chambre de combustion de la turbomachine.

Selon d'autres variantes de l'invention, la source froide provient d'un autre flux d'air généré par la turbomachine, ou d'un mélange de flux d'air générés par la turbomachine.

L'invention concerne également une vanne comprenant un actionneur pneumatique, caractérisée en ce qu'elle comprend un régulateur selon l'invention, configuré pour alimenter ledit actionneur pneumatique.

En équipant une vanne d'un régulateur selon l'invention, on peut former une vanne compacte dans laquelle tous les éléments de la vanne sont disposés à proximité les uns les autres, sans nécessité de déporter une partie des éléments de la vanne, notamment les éléments du régulateur sensibles à la température.

La vanne peut par exemple être utilisé dans un système de conditionnement d'air d'un aéronef.

L'invention concerne également un aéronef comprenant au moins une turbomachine, caractérisé en ce qu'il comprend un régulateur selon l'invention, et un canal permettant de conduire un air d'écoulement de la turbomachine vers la membrane du dispositif de détente du régulateur, l'air d'écoulement de la turbomachine formant ainsi la source froide et la source de pression de référence de la membrane.

L'invention concerne également un régulateur, une vanne et un aéronef, caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'un régulateur selon un premier mode de réalisation de l'invention.
[Fig. 2] est une vue schématique d'un régulateur selon un deuxième mode de réalisation de l'invention.
[Fig. 3] est une vue schématique d'un dispositif de détente d'un régulateur selon un mode de réalisation de l'invention
[Fig.4] est une vue schématique simplifiée d'un système de conditionnement d'air selon un premier mode de réalisation de l'invention.
[Fig.5] est une vue schématique simplifiée d'un système de conditionnement d'air selon un deuxième mode de réalisation de l'invention.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

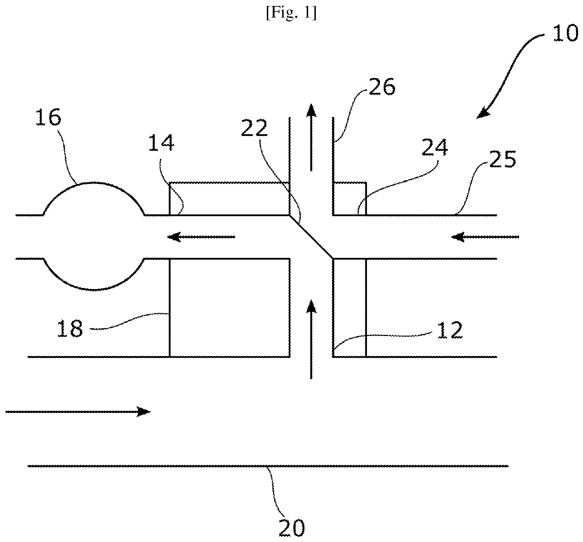

La figure 1 illustre un régulateur 10 selon un premier mode de réalisation de l'invention. Le régulateur 10 est configuré pour recevoir un flux d'air chaud porteur d'une puissance pneumatique via une entrée 12 d'air, pour traiter cet air chaud et pour transmettre l'air chaud traité vers une sortie 14 d'air configurée pour alimenter un actionneur 16 pneumatique. Le traitement est effectué à l'intérieur d'un corps 18 de régulateur.

Le flux d'air chaud provient ici d'une conduite 20 dans laquelle circule de l'air chaud.

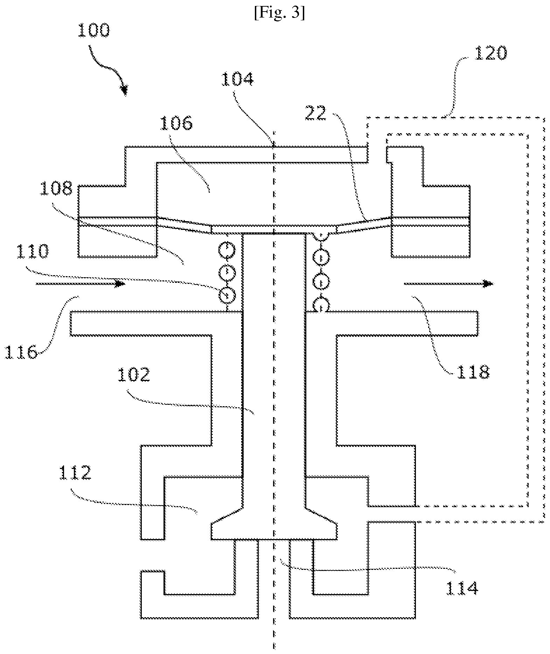

L'air chaud est ensuite traité par un dispositif de détente de l'air, ici schématisé par sa membrane 22, et décrit plus en détail en référence avec la figure 3. Le dispositif de détente de l'air traite, grâce à sa membrane 22, le flux d'air chaud entré par l'entrée 12 d'air. En particulier, la membrane 22 est configurée pour contrôler le débit du flux d'air chaud par comparaison de la pression du flux d'air chaud avec la pression d'une source de référence, provenant d'une arrivée 24 de la source de référence et menée par un conduit 25. La source de référence, une fois passée par la membrane, rejoint une sortie 26 d'air, qui peut être reliée à d'autres systèmes ou directement connectée à l'air ambiant.

La membrane 22 est en contact avec le flux d'air chaud et subit ainsi des contraintes thermiques fortes qui peuvent l'endommager ou modifier ses caractéristiques techniques. La membrane 22 est donc un élément mécanique sensible à la température. Dans un système de l'art antérieur, la source de pression de référence est généralement l'air ambiant avec une pression ambiante. Dans un aéronef, l'air ambiant est généralement chaud du fait de la situation du régulateur, et l'air ambiant n'a pas de composante dynamique dans sa pression.

Dans l'invention, comme schématisé dans ce mode de réalisation, la source de pression est à une température inférieure à l'air ambiant, et est une source de pression dynamique ce qui permet, en dirigeant la source de pression vers la membrane 22, de refroidir et ventiler efficacement la membrane.

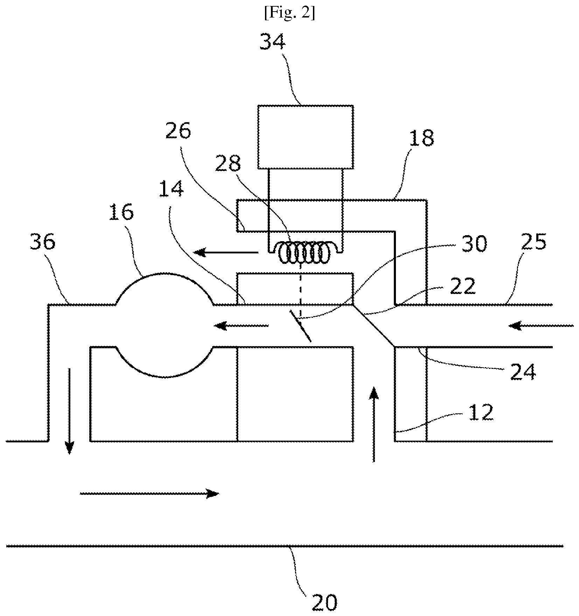

La figure 2 représente schématiquement un régulateur selon un deuxième mode de réalisation de l'invention. Les éléments déjà décrits en référence avec la figure 1 portent la même référence et ont les mêmes fonctions.

Ce deuxième mode de réalisation permet la récupération de l'air provenant de la source de pression, après le refroidissement de la membrane 22, afin de refroidir et ventiler un ou plusieurs éléments mécaniques ou électriques sensibles à la température, par exemple ici un solénoïde 28, configuré pour ouvrir ou fermer un clapet 30 contrôlant la distribution de l'air traité par le dispositif de détente pour alimenter l'actionneur 16 pneumatique. L'air refroidissant et ventilant le solénoïde 28 peut ensuite alimenter d'autres éléments mécaniques ou électroniques sensibles à la température (non représentés), puis être rejeté par la sortie 26 d'air vers l'air ambiant.

Le solénoïde 28 peut ainsi être disposé directement à proximité du clapet 30 qu'il contrôle, sans nécessité d'être déporté. Il est commandé par un dispositif 34 de commande qui peut lui être déporté, par exemple faire partie des ordinateurs de bord d'un aéronef.

Dans ce mode de réalisation, l'air sortant de l'actionneur pneumatique est guidé par un conduit 36 vers la conduite 20 dans laquelle circule de l'air chaud.

La figure 3 représente schématiquement un dispositif 100 de détente de l'air selon un mode de réalisation de l'invention.

Le dispositif 100 de détente de l'air comprend un piston 102 se déplaçant longitudinalement selon un axe 104 en fonction des pressions respectives d'une première chambre 106 et d'une deuxième chambre 108, séparées par la membrane 22. Le piston est contraint en position par un ressort 110.

Le dispositif 100 de détente de l'air compare la pression de l'air chaud porteur de puissance pneumatique présent dans la première chambre 106 avec la pression de la source de pression de référence dans la deuxième chambre 108. La différence de pression permet le mouvement de la membrane qui en se déplaçant entraine le piston, permettant la circulation de l'air chaud porteur de puissance pneumatique présent dans la troisième chambre 112, vers une sortie 114 permettant la transmission de l'air en direction de l'actionneur pneumatique (dans un régulateur tel que décrit précédemment en référence avec les figures 1 et 2).

La première chambre 106 et la troisième chambre 112, accueillant de l'air chaud porteur de puissance pneumatique, sont reliées par une connexion 120.

La source de pression de référence est en mouvement, entrant par une entrée 116 d'air et sortant par une sortie 118 d'air, permettant ainsi le refroidissement et la ventilation de la membrane à son passage. L'air sortant par la sortie 118 d'air est soit directement rejeté à l'air ambiant, comme dans le premier mode de réalisation du régulateur décrit en référence avec la figure 1, soit est utilisé pour refroidir et ventiler d'autres éléments sensibles à la température, comme dans le deuxième mode de réalisation du régulateur décrit en référence avec la figure 2.

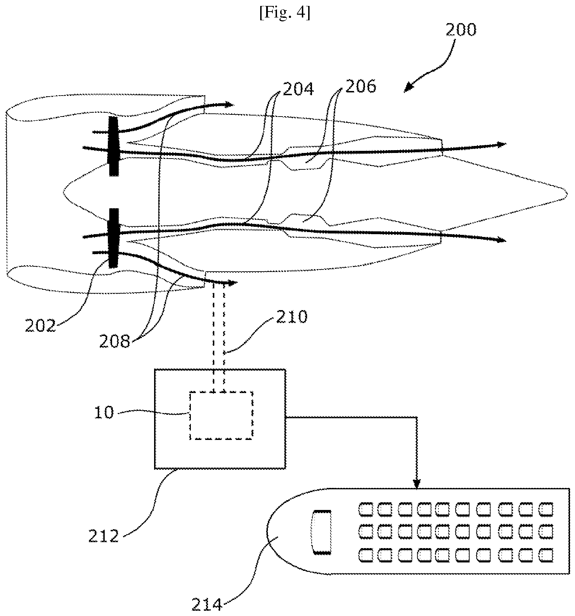

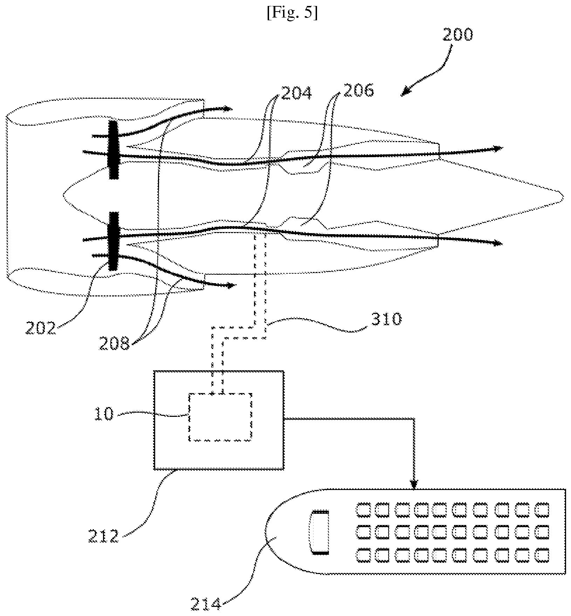

Les figures 4 et 5 représentent schématiquement et de façon simplifiée un système de conditionnement d'air selon un mode de réalisation de l'invention, installé dans un aéronef et comprenant un régulateur selon un des modes de réalisation décrit ci-dessus.

L'aéronef comprend une turbomachine, en particulier un turboréacteur 200, représenté de façon simplifié, comprenant une soufflante 202 permettant la formation de deux flux d'air, un flux 204 d'air primaire destiné à être compressé puis injecté dans une chambre 206 de combustion, et un flux 208 d'air secondaire circulant autour de la partie du turboréacteur 200 traitant le flux 204 d'air primaire.

Ce flux d'air secondaire, froid car provenant de l'air extérieur entrant dans le turboréacteur et ayant une pression dynamique générée par la soufflante 202, forme un air d'écoulement, aussi appelé *fan air* en anglais car mis en mouvement par la soufflante (*fan* en anglais).

Dans le premier mode de réalisation représenté en figure 4, cet air d'écoulement est prélevé via un canal 210 conduisant vers le régulateur 10. L'air découlement ainsi prélevé sert de source de pression de référence au régulateur 10 et permet de refroidir et ventiler la membrane, le solénoïde et/ou tout éléments électronique ou mécanique sensible à la température souhaitée.

Selon le deuxième mode de réalisation représenté en figure 5, la source de pression de référence formant source froide est le flux 204 d'air primaire qui est prélevé via un canal 310 conduisant vers le régulateur. L'air primaire ainsi prélevé sert de source de pression de référence au régulateur 10 et permet de refroidir et ventiler la membrane, le solénoïde et/ou tout éléments électronique ou mécanique sensible à la température souhaitée.

Selon d'autres modes de réalisation non décrits, la source de pression de référence provient d'un autre flux d'air de l'aéronef, ou d'un mélange de plusieurs flux d'air de l'aéronef, par exemple un mélange d'air découlement et d'air primaire.

Le régulateur 10 est avantageusement intégré dans un système 212 de conditionnement d'air destiné à conditionner l'air de la cabine 214 de l'aéronef, par exemple pour contrôler un actionneur pneumatique permettant d'activer une vanne du système 212 de conditionnement d'air.

Le régulateur peut aussi être utilisé dans d'autres systèmes qu'un système de conditionnement d'air, en particulier tout système qui utilise de l'air primaire comme les vannes de décharge par exemple.

## Revendications

1. Régulateur, configuré pour recevoir un flux d'air chaud porteur de puissance pneumatique via une entrée (12) d'air, pour traiter cet air chaud et pour transmettre l'air chaud traité vers une sortie (14) d'air configurée pour alimenter un actionneur (16) pneumatique, comprenant une source de pression de référence et un dispositif de détente de l'air comprenant une membrane (22), ladite membrane (22) étant configurée pour contrôler le débit du flux d'air chaud par comparaison de la pression dudit flux d'air chaud avec la pression de référence de la source de pression de référence, le régulateur étant **caractérisé en ce qu'**il comprend une arrivée (24) d'air configuré pour recevoir une source froide, et un conduit (25) permettant de conduire la source froide à ladite membrane (22), de sorte que la source froide forme la source de pression de référence et une source de refroidissement de ladite membrane (22), la source de pression de référence formé par la source froide étant à une température inférieure à un air ambiant entourant le régulateur et étant une source de pression dynamique.

2. Régulateur selon la revendication 1, **caractérisé en ce qu'**il comprend au moins un élément (28) mécanique et/ou électronique sensible à la température agencé en amont ou en aval de la membrane et des conduits permettant de conduire la source froide vers ledit au moins un élément (28) mécanique et/ou électronique sensible à la température, la source froide permettant le refroidissement dudit au moins un élément (28) mécanique et/ou électronique sensible à la température en amont ou en aval du refroidissement de la membrane.

3. Régulateur selon la revendication 2, **caractérisé en ce que** chaque élément (28) mécanique et/ou électronique sensible à la température est choisi parmi un des éléments de la liste suivante :
- un solénoïde,
- élément mécanique et/ou électronique d'un moteur-couple,
- élément mécanique et/ou électronique d'une servo-vanne.

4. Régulateur selon l'une des revendications 1 à 3, **caractérisé en ce que** la source froide est prélevée dans une turbomachine.

5. Régulateur selon la revendication 4, **caractérisé en ce que** la source froide est un air (208) d'écoulement prélevé dans la turbomachine.

6. Régulateur selon la revendication 4, **caractérisé en ce que** la source froide est un air (204) primaire moteur prélevé dans la turbomachine.

7. Vanne actionnée par un actionneur pneumatique, **caractérisée en ce qu'**elle comprend un régulateur (10) selon l'une des revendications 1 à 6, configuré pour alimenter ledit actionneur pneumatique.

8. Aéronef comprenant au moins une turbomachine (200), **caractérisé en ce qu'**il comprend un régulateur (10) selon l'une des revendications 1 à 6, et au moins un canal (210) permettant de conduire un air d'écoulement de la turbomachine vers la membrane (22) du dispositif de détente du régulateur, l'air d'écoulement de la turbomachine formant ainsi la source froide et la source de pression de référence de la membrane (22).

## Patentansprüche

1. Regler, welcher ausgestaltet ist, über einen Lufteinlass (12) einen Heißluftstrom zu empfangen, der pneumatische Energie transportiert, diese Heißluft zu behandeln und die behandelte Heißluft zu einem Luftauslass (14) zu senden, der ausgestaltet ist, ein pneumatisches Stellglied (16) zu versorgen, der eine Referenzdruckquelle und eine Luftexpansionsvorrichtung mit einer Membran (22) umfasst, worin die Membran (22) ausgestaltet ist, den Durchsatz des Heißluftstroms durch Vergleich des Drucks des Heißluftstroms mit dem Referenzdruck der Referenzdruckquelle zu steuern, worin der Regler **dadurch gekennzeichnet ist, dass** er einen Lufteinlass (24), der ausgestaltet ist, eine Kältequelle aufzunehmen, und eine Leitung (25) zum Führen der Kältequelle zu der Membran (22) umfasst, so dass die Kältequelle die Referenzdruckquelle und eine Quelle zum Kühlen der Membran (22) bildet, worin die durch die Kältequelle gebildete Referenzdruckquelle eine niedrigere Temperatur als die den Regler umgebende Umgebungsluft aufweist und eine dynamische Druckquelle ist.

2. Regler nach Anspruch 1, **dadurch gekennzeichnet, dass** dieser mindestens ein temperaturempfindliches mechanisches und/oder elektronisches Element (28) umfasst, das stromaufwärts oder stromabwärts der Membran angeordnet ist, und Leitungen, die es ermöglichen, die Kältequelle zu dem mindestens einen temperaturempfindlichen mechanischen und/oder elektronischen Element (28) zu führen, worin die Kältequelle die Kühlung des mindestens einen temperaturempfindlichen mechanischen und/oder elektronischen Elements (28) stromaufwärts oder stromabwärts der Kühlung der Membran ermöglicht.

3. Regler nach Anspruch 2, **dadurch gekennzeichnet, dass** jedes temperaturempfindliche mechanische und/oder elektronische Element (28) ausgewählt ist aus einem der Elemente der Liste:
- eine Magnetspule,
- ein mechanisches und/oder elektronisches Bauteil eines Torquemotors,
- ein mechanisches und/oder elektronisches Bauteil eines Servoventils.

4. Regler nach einem der Ansprüche 1 bis 3, **dadurch gekennzeichnet, dass** die Kältequelle aus einer Turbomaschine entnommen wird.

5. Regler nach Anspruch 4, **dadurch gekennzeichnet, dass** die Kältequelle Gebläseluft (208) ist, die von der Turbomaschine entnommen wird.

6. Regler nach Anspruch 4, **dadurch gekennzeichnet, dass** die Kältequelle die von der Turbomaschine entnommene primäre Triebwerksluft (204) ist.

7. Ventil, das durch ein pneumatisches Stellglied betätigt wird, **dadurch gekennzeichnet, dass** es einen Regler (10) nach einem der Ansprüche 1 bis 6 umfasst, ausgestaltet zur Versorgung des pneumatischen Stellglieds.

8. Luftfahrzeug mit mindestens einer Turbomaschine (200), **dadurch gekennzeichnet, dass** es einen Regler (10) nach einem der Ansprüche 1 bis 6 und mindestens einen Kanal (210) umfasst, der es ermöglicht, die Gebläseluft der Turbomaschine zur Membran (22) der Expansionsvorrichtung des Reglers zu leiten, worin die Gebläseluft der Turbomaschine somit die Kältequelle und die Referenzdruckquelle der Membran (22) bildet.

## Claims

1. Regulator, configured to receive a stream of hot air carrying pneumatic power via an air inlet (12), to treat this hot air and to send the treated hot air to an air outlet (14) configured to supply a pneumatic actuator (16), comprising a reference pressure source and an air expansion device comprising a diaphragm (22), said diaphragm (22) being configured to control the flow rate of the hot air stream by comparing the pressure of said hot air stream with the reference pressure of the reference pressure source, the regulator being **characterized in that** it comprises an air intake (24) configured to receive a cold source, and a pipe (25) for guiding the cold source to said diaphragm (22), so that the cold source forms the reference pressure source and a source for cooling said diaphragm (22), the reference pressure source formed by the cold source being at a lower temperature than the ambient air surrounding the regulator and being a dynamic pressure source.

2. Regulator according to claim 1, **characterized in that** it comprises at least one temperature-sensitive mechanical and/or electronic element (28) arranged upstream or downstream of the diaphragm and pipes allowing the cold source to be guided toward said at least one temperature-sensitive mechanical and/or electronic element (28), the cold source allowing the cooling of said at least one temperature-sensitive mechanical and/or electronic element (28) upstream or downstream of the cooling of the diaphragm.

3. Regulator according to claim 2, **characterized in that** each temperature-sensitive mechanical and/or electronic element (28) is chosen from one of the elements of the following list:
- a solenoid,
- mechanical and/or electronic component of a torque motor,
- mechanical and/or electronic component of a servo-valve.

4. Regulator according to one of claims 1 to 3, **characterized in that** the cold source is taken from a turbomachine.

5. Regulator according to claim 4, **characterized in that** the cold source is fan air (208) taken from the turbomachine.

6. Regulator according to claim 4, **characterized in that** the cold source is primary engine air (204) taken from the turbomachine.

7. Valve actuated by a pneumatic actuator, **characterized in that** it comprises a regulator (10) according to one of claims 1 to 6 configured to supply said pneumatic actuator.

8. Aircraft comprising at least one turbomachine (200), **characterized in that** it comprises a regulator (10) according to one of claims 1 to 6, and at least one channel (210) making it possible to guide fan air from the turbomachine toward the diaphragm (22) of the regulator expansion device, the fan air of the turbomachine thus forming the cold source and the reference pressure source of the diaphragm (22).
